# EUROPÄISCHE PATENTSCHRIFT

(11) **EP 4 536 510 B1**
(45) Veröffentlichungstag und Bekanntmachung des Hinweises auf die Patenterteilung: **25.03.2026**
(21) Anmeldenummer: 23728377.5
(22) Anmeldetag: 25.05.2023
(51) Int. Cl.: B60R 1/00

(54) **KAMERA-MONITOR-SYSTEM FÜR EIN FAHRZEUG UND VERFAHREN ZUR STEUERUNG EINES SOLCHEN KAMERA-MONITOR-SYSTEMS**
CAMERA-MONITOR SYSTEM FOR A VEHICLE, AND METHOD FOR CONTROLLING SUCH A CAMERA-MONITOR SYSTEM
SYSTÈME À CAMÉRA ET MONITEUR POUR UN VÉHICULE ET PROCÉDÉ DE COMMANDE D'UN TEL SYSTÈME À CAMÉRA ET MONITEUR

(30) Priorität: 07.06.2022 DE 102022114245
(43) Veröffentlichungstag der Anmeldung: 16.04.2025
(73) Patentinhaber: Bayerische Motoren Werke Aktiengesellschaft, 80809 München (DE)
(72) Erfinder: HOFFMANN, Philipp, 30539 Hannover (DE)
(86) Internationale Anmeldenummer: PCT/EP2023/064064
(87) Internationale Veröffentlichungsnummer: WO 2023/237345

(56) Entgegenhaltungen:
- DE-A1- 102020 120 626
- US-A1- 2018 131 877

## Beschreibung

Die Erfindung betrifft ein Kamera-Monitor-System für ein Fahrzeug. Insbesondere betrifft die Erfindung die Steuerung eines Kamera-Monitor-Systems.

Ein Kraftfahrzeug umfasst einen Außenspiegel, um einem Fahrer einen Eindruck eines hinter ihm liegenden Verkehrsgeschehens zu vermitteln. Der Außenspiegel kann durch ein Kamera-Monitor-System (camera monitor system CMS) ersetzt werden, das eine am Kraftfahrzeug angebrachte Kamera und eine grafische Anzeige im Innenraum umfasst. Die Kamera ist üblicherweise in etwa an einer Stelle am Kraftfahrzeug angebracht, an der sonst der Außenspiegel liegt, und tastet einen seitlich hinter dem Fahrer liegenden Bereich ab. Ein durch die Kamera bereitgestelltes Bild kann auf der Anzeige dargestellt werden, sodass der Fahrer auf der Anzeige ein Bild erkennt, das sich im Wesentlichen wie das eines Außenspiegels verhält.

Aus der DE 10 2021 004 637 A1 sind ein Fahrerassistenzsystem zum Unterstützen einer Rückwärtsfahrt eines Fahrzeugs mit einem Anhänger sowie ein entsprechend ausgestattetes Fahrzeug bekannt, das eine Rückfahrkamera und eine an der Rückfahrkamera angeordnete Projektionsvorrichtung aufweist.

Der nächstliegende Stand der Technik US2018/131877 offenbart ein Anzeigesystem für ein Fahrzeug, wobei das Anzeigesystem eine Kamera mit einem vorbestimmten Abtastbereich zur Abtastung eines ersten Bilds aus einem Umfeld des Fahrzeugs und eine grafische Anzeige umfasst.

Ein Vorteil eines CMS besteht in der Möglichkeit, die Anzeige an herrschende Lichtverhältnisse anzupassen. Beispielsweise können in einer nächtlichen Umgebung ein Kontrast des dargestellten Bilds angehoben und eine Helligkeit abgesenkt werden. Scheint die Sonne direkt in die Kamera, so können der Kontrast und die Helligkeit passend abgesenkt werden. In einer sehr hellen Umgebung können der Kontrast und die Helligkeit angehoben werden. Der Fahrer kann den hinter ihm liegenden Bereich so verbessert erkennen.

Die Änderung der Darstellung kann jedoch auch dazu führen, dass der Fahrer Details auf dem ihm dargebotenen Bild nicht mehr gut erkennen kann. Insbesondere bei einer schlagartigen Veränderung umgebender Lichtverhältnisse, beispielsweise bei der Ein- oder Ausfahrt aus einem Tunnel, kann die Steuerung der Anzeige schwierig sein.

Es wurde vorgeschlagen, das mittels der Anzeige bereitgestellte Bild mittels einer weiteren Kamera abzutasten und die Bereitstellung des angezeigten Bilds auf der Basis der Abtastung zu steuern. Dazu ist jedoch eine weitere Kamera erforderlich, die im Innenraum des Kraftfahrzeugs angebracht werden muss. Damit können substanzielle Kosten verbunden sein. Außerdem kann durch einen Abtastungsfehler der weiteren Kamera ein neuer Fehler in die Bereitstellung des Bilds für den Fahrer eingetragen werden.

Eine der Erfindung zu Grunde liegende Aufgabe besteht in der Angabe einer verbesserten Technik zur Steuerung eines Kamera-Monitor-Systems für ein Fahrzeug. Die Erfindung löst die Aufgabe mittels der Gegenstände der unabhängigen Ansprüche. Unteransprüche geben bevorzugte Ausführungsformen wieder.

Nach einem ersten Aspekt umfasst ein Anzeigesystem für ein Fahrzeug eine Kamera mit einem vorbestimmten Abtastbereich zur Abtastung eines ersten Bilds aus einem Umfeld des Fahrzeugs; eine Verarbeitungseinrichtung zur Bereitstellung eines zweiten Bilds auf der Basis des ersten Bilds; und eine grafische Anzeige zur Darstellung des zweiten Bilds. Darüber hinaus ist ein optisches Element zur Einblendung der Anzeige in den Abtastbereich der Kamera vorgesehen, sodass ein Abschnitt des ersten Bilds das zweite Bild umfasst. Die Verarbeitungseinrichtung ist dazu eingerichtet, das zweite Bild in Abhängigkeit der Einblendung bereitzustellen.

Es wurde erkannt, dass mittels des optischen Elements das zweite Bild, das einem Fahrer des Fahrzeugs bereitgestellt ist, rein optisch in den Abtastbereich der Kamera eingeblendet werden kann, sodass die Kamera zusätzlich eine Abtastung des zweiten Bilds auf der Anzeige durchführt. Dabei belegt die Einblendung bevorzugt nur einen kleinen Teil der Bildfläche des zweiten Bilds, sodass eine darstellbare Fläche oder eine Auflösung des zweiten Bilds nicht oder nur wenig verringert ist.

Eine weitere Kamera zur Abtastung der Anzeige bzw. des zweiten Bilds kann entfallen, sodass das Anzeigesystem einfacher aufgebaut werden oder verbessert ohne Nutzung einer systemfremden Komponente, etwa einer Innenraumkamera, auskommen kann. Das optische Element ist bevorzugt reflektierend und kann insbesondere einen Spiegel, ein Prisma oder ein ähnliches Element umfassen. Optional können auch mehrere optische Elemente verwendet werden, die optional aneinander angebracht oder miteinander verbunden sein können.

Die Verarbeitungseinrichtung ist bevorzugt dazu eingerichtet, das zweite Bild derart bereitzustellen, dass die Einblendung im ersten Bild eine vorbestimmte Helligkeit und/oder einen vorbestimmten Kontrast aufweist. Die vorbestimmte Helligkeit oder der vorbestimmte Kontrast können in Abhängigkeit von herrschenden Lichtverhältnissen im Umfeld des Fahrzeugs bestimmt sein. Die Lichtverhältnisse können mittels eines entsprechenden Sensors oder auf der Basis des ersten Bilds bestimmt werden. In unterschiedlichen vorbestimmten Lichtverhältnissen können die Helligkeit und/oder der Kontrast über einen Normalwert angehoben oder unter ihn abgesenkt werden. Der Normalwert kann durch einen Benutzer des CMS vorgegeben werden.

Der Abtastbereich ist von der Kamera aus bevorzugt nach hinten gerichtet; wobei das optische Element am Fahrzeug hinter der Kamera und hinter dem zweiten Bild liegt. Hierin verwendete Richtungsangaben orientieren sich, falls nicht anders angegeben ist, an einer üblichen Fahrtrichtung des Fahrzeugs entlang seiner Längsachse nach vorn.

Das optische Element kann einen Strahlengang zwischen der Anzeige und der Kamera umlenken, wozu es bevorzugt wenigstens ein reflektives Element wie einen Spiegel oder ein Prisma umfasst. Eine Umlenkung kann allgemein an einer Grenzfläche zwischen optisch verschieden dichten Medien bewirkt werden, wobei eine Form und Ausrichtung der Grenzfläche die Art der Umlenkung bestimmt. Das optische Element kann gleichzeitig refraktiv wirken, beispielsweise um das in die Kamera eingeblendete zweite Bild zu verkleinern oder zu vergrößern. In einer weiteren Ausführungsform kann das optische Element auch eine vorbestimmte Verzerrung durchführen, beispielsweise eine Trapez oder Kissenverzerrung. Dazu kann die Grenzfläche passend gekrümmt sein. Eine durch eine Perspektive des optischen Elements auf die Anzeige bereits vorhandene Verzerrung kann dadurch teilweise oder vollständig kompensiert werden.

Das Fahrzeug kann eine transparente Scheibe aufweisen und das optische Element kann an der Scheibe angebracht sein. In einer Ausführungsform kann eine bestehende Scheibe um ein innen oder außen angebrachtes optisches Element ergänzt werden. Das optische Element kann mit der Scheibe verkittet, verklebt oder integriert mit der Scheibe hergestellt sein. In einer weiteren Ausführungsform kann ein Abschnitt der Scheibe mit einem Material mit einer anderen optischen Dichte ausgestattet sein. Eine Dicke der Scheibe kann dadurch unverändert sein, aber an der Stelle des optischen Materials kann die gewünschte reflektive Wirkung auftreten. Das optische Element kann klein und unauffällig gestaltet sein.

Die Scheibe kann einen Innenraum des Fahrzeugs, in welchem sich eine Person an Bord befindet, von einem Außenraum abgrenzen und insbesondere eine Front- oder Seitenscheibe umfassen. Die Kamera ist üblicherweise im Bereich eines Vorderrads, eines vorderen Kotflügels, einer A-Säule oder einer vorderen Tür des Fahrzeugs angebracht, wobei das Fahrzeug insbesondere einen Personenkraftwagen oder einen Lastkraftwagen umfassen kann. Besteht eine mögliche Sichtverbindung zwischen der Kamera und der Seitenscheibe, so kann das optische Element in dieser eingesetzt werden. Selbstverständlich kann auch eine andere Scheibe, die den Innenraum des Fahrzeugs vom Außenraum abgrenzt, für die Anbringung des optischen Elements genutzt werden.

Kann von der Kamera aus die Frontscheibe eingesehen werden, so ist auch die Frontscheibe für die Anbringung des optischen Elements geeignet. Wird die Frontscheibe beispielsweise dazu verwendet, das von der Anzeige bereitgestellte Bild darzustellen bzw. in Richtung des Kopfbereichs zu reflektieren, so kann das optische Element das zweite Bild in einem begrenzten Bereich in der Frontscheibe auskoppeln und in Richtung der Kamera lenken. Das optische Element ist bevorzugt ebenfalls klein und kann für eine Person an Bord des Fahrzeugs unauffällig sein. Dabei hat es allgemein eine wesentlich kleinere sichtbare Fläche als eine direkte grafische Anzeige. Üblicherweise hat das optische Element eine Fläche, die mit einer Lichteintrittsfläche der Kamera vergleichbar ist.

Das Fahrzeug kann einen Fahrerplatz umfassen, sodass ein Kopf eines Fahrers auf dem Fahrerplatz in einem vorbestimmten Kopfbereich liegt. Die Anzeige kann dazu eingerichtet sein, das zweite Bild im Bereich einer Verbindungslinie zwischen dem Kopfbereich und der Kamera bereitzustellen. Dadurch kann ein Anzeigefehler zwischen dem wahrgenommenen zweiten Bild und dem tatsächlichen Ursprung des zweiten Bilds minimiert sein. Besonders bei gefährlichen oder präzisen Manövern, etwa bei der Fahrt auf einer Autobahn oder beim Einparken im Bereich eines Hindernisses, kann diese Anordnung dazu beitragen, dem Fahrer einen realistischen Eindruck des seitlich hinter ihm liegenden Bereichs zu geben.

Die Kamera liegt im Außenraum, während die Anzeige bevorzugt im Innenraum angebracht ist. In manchen Ausführungsformen ist die Anzeige dazu eingerichtet, das zweite Bild als virtuelles Bild bereitzustellen, sodass es für den Fahrer an einer anderen Stelle wahrgenommen werden kann als der, an der sich die Anzeige befindet. Beispielsweise kann die Anzeige eine Head-up Anzeige umfassen, die das zweite Bild mittels einer geneigten Scheibe in Richtung des Fahrers projizieren kann. Das zweite Bild kann für den Fahrer außerhalb des Fahrzeugs zu liegen scheinen, obwohl sich die Anzeige bevorzugt im Innenraum befindet.

An der Kamera kann ein weiteres optisches Element zur Einblendung des ersten optischen Elements in den Abtastbereich angebracht sein. Das weitere optische Element kann im Bereich einer Öffnung der Kamera zum Eintritt von Licht angeordnet sein. Dabei kann das optische Element auch hier klein ausgeführt sein, sodass es einem Umwelteinfluss im Außenbereich des Fahrzeugs, beispielsweise Wind, Regen oder Staub in keiner besonderen Weise ausgesetzt sein kann. Das optische Element kann an oder hinter einer Schutzscheibe angebracht sein, die eine Lichteintrittsfläche der Kamera angebracht ist, um die Optik der Kamera gegen mechanische Umwelteinflüsse wie Wasser oder Staub zu schützen.

In einer bevorzugten Ausführungsform liegt das optische Element hinter der Verbindungslinie zwischen der Kamera und dem Kopfbereich des Fahrers. Dies kann insbesondere dann vorteilhaft sein, wenn das optische Element seitlich des Fahrers angebracht ist, beispielsweise in einer Seitenscheibe des Fahrzeugs. Das optische Element kann hinter dem Kopfbereich liegen, sodass ein direkter Blick des Fahrers durch die Seitenscheibe nicht durch das optische Element gestört ist. Liegt das optische Element in der Frontscheibe, so kann ein weiteres optisches Element vorgesehen sein, um das zweite Bild in Richtung des optischen Elements zu werfen. Das zweite Bild kann an zwei oder mehr optischen Elementen reflektiert werden, bevor es in die Kamera fällt.

Die Anzeige kann dazu eingerichtet sein, das zweite Bild zu projizieren. Dabei kann das zweite Bild für den Fahrer als virtuelles Bild erkennbar sein. Im Strahlengang der Anzeige kann ein weiteres optisches Element zur Auskopplung des zweiten Bilds angebracht sein. Es können auch mehrere optische Elemente miteinander kombiniert werden, um das zweite Bild in den Abtastbereich der Kamera einzublenden. Dabei sind die optischen Elemente bevorzugt jeweils zur Umlenkung des Strahlengangs eingerichtet und können optional noch eine weitere optische Funktion erfüllen, beispielsweise ein Fokussieren, ein Verzerren, ein Verkleinern, ein Vergrößern, ein Polarisieren, ein Filtern oder ein Färben des durchtretenden Lichts.

Nach einem weiteren Aspekt umfasst ein Fahrzeug ein hierin beschriebenes Anzeigesystem. Das Fahrzeug umfasst bevorzugt ein Kraftfahrzeug und kann beispielsweise ein Kraftrad, einen Personenkraftwagen oder einen Omnibus umfassen. Im Fall eines Kraftrads kann kein Innenraum vorliegen, in diesem Fall können die Kamera, das optische Element und die Anzeige im Außenraum angebracht sein.

Nach noch einem weiteren Aspekt umfasst ein Verfahren zur Steuerung eines hierin beschriebenen Anzeigesystems Schritte des Bereitstellens eines ersten Bilds mittels der Kamera; des Bestimmens eines Kontrollabschnitts im ersten Bild, der das zweite Bild repräsentiert; und des Bereitstellens des zweiten Bilds in Abhängigkeit des Kontrollabschnitts.

Das Verfahren kann bevorzugt mittels einer hierin beschriebenen Verarbeitungseinrichtung ausgeführt werden. Dazu ist die Verarbeitungseinrichtung bevorzugt elektronisch ausgeführt und kann einen programmierbaren Mikrocomputer oder Mikrocontroller oder einen integrierten Schaltkreis umfassen. Das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Es ist besonders bevorzugt, dass das zweite Bild disjunkt in den Kontrollabschnitt und einen Darstellungsabschnitt unterteilt wird; wobei das zweite Bild weiter bevorzugt nur auf der Basis des Darstellungsabschnitts bereitgestellt wird. Der Kontrollabschnitt hingegen liegt dem zweiten Bild bevorzugt nicht zu Grunde. Optional kann das erste Bild noch einen oder mehrere weitere Abschnitte umfassen, die gar nicht weiter ausgewertet oder weitergeleitet werden. Beispielsweise kann die Lage des Darstellungsabschnitts derart im ersten Bild eingestellt werden, dass ein vorbestimmter Abtastbereich erfasst wird. Ein umgebender Abschnitt - abgesehen vom Kontrollabschnitt - kann vernachlässigt werden.

Anders ausgedrückt wird das zweite Bild bevorzugt nur auf der Basis eines Teils des ersten Bilds bereitgestellt. Die Bereitstellung erfolgt dabei auf der Basis eines Abschnitts des ersten Bilds, der nicht in das zweite Bild einfließt. So kann verhindert werden, dass auf dem zweiten Bild ein Abschnitt erkennbar ist, der einen anderen Inhalt darstellt als aus dem Abtastbereich der Kamera entnommen ist. Der Fahrer kann auf diese Weise nicht verwirrt oder abgelenkt werden und er kann das ihm dargestellte zweite Bild ohne Weiteres für die Steuerung des Fahrzeugs verwenden.

Die Kamera, die Anzeige und die Verarbeitungseinrichtung können zusammen eine geschlossene Regelschleife bilden. Es ist bevorzugt, dass bei der Steuerung der Bereitstellung des zweiten Bilds eine zeitliche Verzögerung zwischen einer Änderung des zweiten Bilds und einer Änderung des Kontrollabschnitts berücksichtigt wird. Dabei kann eine erste Verzögerung berücksichtigt werden, die zwischen der Änderung der Steuerung und der Ausgabe eines veränderten zweiten Bilds anzusetzen ist. Eine zweite Verzögerung, die zwischen der Bereitstellung eines geänderten Umfelds und der Bereitstellung eines entsprechend geänderten ersten Bilds liegt, kann ebenfalls berücksichtigt werden.

Die Erfindung wird nun mit Bezug auf die beigefügten Zeichnungen genauer beschrieben, in denen:
- Figur 1: ein Anzeigesystem in einer ersten Ausführungsform;
- Figur 2: ein Anzeigesystem in einer zweiten Ausführungsform;
- Figur 3: ein Anzeigesystem in einer dritten Ausführungsform;
- Figur 4: eine Darstellung eines ersten und eines zweiten Bilds; und
- Figur 5: ein Ablaufdiagramm eines Verfahrens
illustriert.

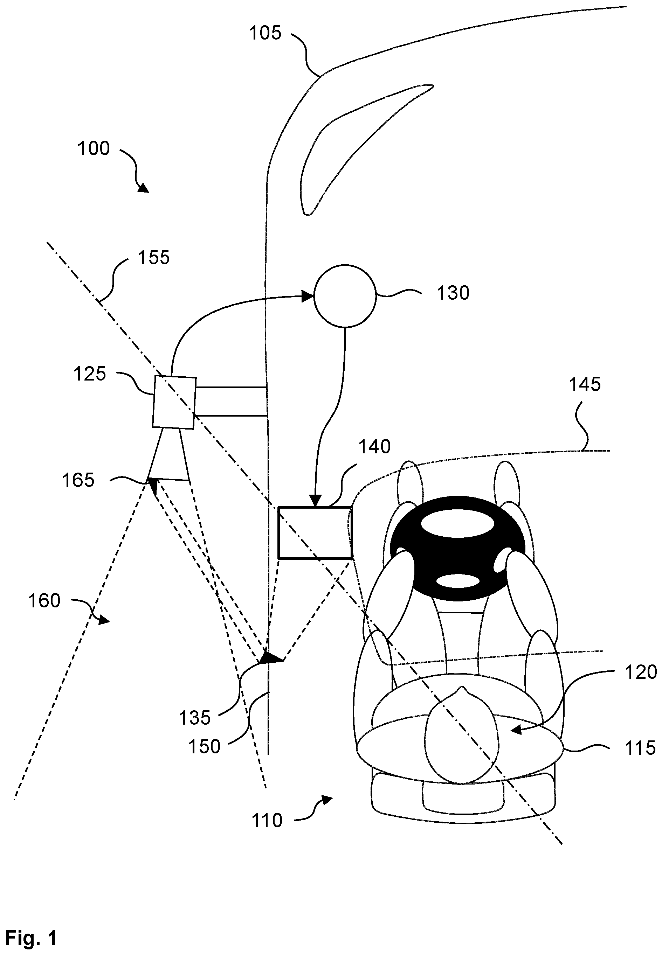

Figur 1 zeigt ein Anzeigesystem 100 an einem Fahrzeug 105 in einer ersten beispielhaften Ausführungsform. Das Fahrzeug 105 umfasst einen Fahrerplatz 110, der exemplarisch in Fahrtrichtung links am Fahrzeug 105 dargestellt ist. Ein Fahrer 115, der sich auf dem Fahrerplatz 110 befindet, hat seinen Kopf im Wesentlichen in einem vorbestimmten Kopfbereich 120.

Das Anzeigesystem 100 umfasst eine Kamera 125, eine Verarbeitungseinrichtung 130, ein optisches Element 135 und eine grafische Anzeige 140. Die Kamera 125 ist auf einer Außenseite des Fahrzeugs 105 angebracht, bevorzugt im Wesentlichen an einer Stelle, an der üblicherweise ein Außenspiegel angebracht ist. Es ist jedoch nicht notwendig, dass eine Sichtverbindung zwischen dem Kopfbereich 120 und der Kamera 125 besteht. Die Kamera liegt in Längsrichtung meist hinter einer Achse eines Vorderrads und vor dem Kopfbereich 120. In vertikaler Richtung liegt die Kamera 125 bevorzugt unter einer oberen Kante und optional auch unter einer unteren Kante einer Frontscheibe 145 oder einer Seitenscheibe 150, die jeweils einen Innenraum des Fahrzeugs 105 vom Außenraum abtrennen können.

In der Darstellung von Figur 1 ist die Kamera 125 zur verbesserten Erläuterung der vorgestellten Technik größer und weiter seitlich vom Fahrzeug 105 entfernt dargestellt als dies an einem realen Fahrzeug 105 der Fall wäre. Rein exemplarisch liegt die Kamera 125 an der linken Seite des Fahrzeugs 105. Es ist zu beachten, dass die hierin beschriebene Technik weder eine bestimmte Position des Fahrerplatzes 110 im Fahrzeug 105 voraussetzt, noch von einer vorbestimmten Seite ausgeht, an der die Kamera 125 am Fahrzeug 105 angebracht ist. Insbesondere kann die vorgestellte Technik an beiden Seiten des Fahrzeugs 105 angebracht werden, um dem Fahrer 115 einen beidseitigen Rückblick zu ermöglichen.

Die Verarbeitungseinrichtung 130 ist üblicherweise als Steuergerät oder Steuervorrichtung ausgebildet und umfasst meist einen programmierbaren Mikrocomputer. Dabei ist die Verarbeitungseinrichtung 130 dazu eingerichtet, die Anzeige 140 auf der Basis eines von der Kamera 125 bereitgestellten Bilds zur Bereitstellung eines Bilds an den Fahrer 115 zu steuern.

Die Anzeige 140 von Figur 1 ist beispielhaft als Bildschirm ausgeführt, der ein für den Fahrer 115 erkennbares Bild auf seiner Oberfläche darstellen kann. Wie hierin noch genauer ausgeführt ist, kommt es für die betrachteten geometrischen Zusammenhänge weniger auf die Position der Anzeige 140 als auf die des von ihm bereitgestellten und für den Fahrer 115 erkennbaren Bilds an. Für die als Bildschirm ausgeführte Anzeige 140 fällt ihre Position mit der des von ihr dargestellten Bilds zusammen.

Die Anzeige 140 liegt bevorzugt auf einer Verbindungslinie 155 zwischen der Kamera 125 und dem Kopfbereich 120. Idealerweise verläuft die Verbindungslinie 155 durch einen Mittelpunkt der Bildebene der Kamera 125, einen Mittelpunkt der Anzeigefläche der Anzeige 140 bzw. ein Auge oder einen optischen Mittelpunkt der Wahrnehmung des Fahrers 115. Eine gewisse Abweichung der Position der Anzeige 140 bzw. des von ihm dargestellten Bilds von der Verbindungslinie 155 kann jedoch toleriert werden.

Es wird vorgeschlagen, das optische Element 135 so zu positionieren, dass es zumindest einen Teil des von der Anzeige 140 für den Fahrer 115 bereitgestellten Bilds in einen Teil des Erfassungsbereichs 160 der Kamera 125 wirft, sodass es von der Kamera 125 erfasst wird. Liegt die Anzeige 140 im Innenraum des Fahrzeugs 105 und die Kamera 115 außerhalb des Innenraums, so muss dazu der Strahlengang eine Begrenzung des Innenraums passieren. In der dargestellten Ausführungsform erfolgt dies an der Seitenscheibe 150. Das optische Element 135 kann im Innenraum oder außerhalb angeordnet sein, bevorzugt ist es jedoch im Bereich der Passage angebracht.

Es ist besonders bevorzugt, dass das optische Element 135 mit einem transparenten Element im Bereich der Begrenzung, hier der Seitenscheibe 150, integriert ausgeführt ist. Dazu kann das optische Element 135 in die Seitenscheibe 150 eingelassen sein. Optional kann das optische Element 135 auch innen und/oder außen teilweise über eine Begrenzung der Seitenscheibe 150 hinausragen. In einer weiteren Ausführungsform ist das optische Element 135 innen oder außen auf die Seitenscheibe 150 aufgesetzt. Das optische Element 135 umfasst bevorzugt einen Spiegel oder ein Prisma, insbesondere ein Umkehr-Prisma wie ein Amici-Prisma, ein Porro-Prisma oder ein Dove-Prisma. Auch ein sphärisches Element wie eine optische Linse oder eine gekrümmte Reflexionsfläche kann umfasst sein. Das optische Element 135 kann auch mehrere reflektierende oder refraktierende Flächen umfassen.

In der Darstellung von Figur 1 liegt das optische Element 135 nicht im Abtastbereich 160, sodass Licht vom optischen Element 135 zwar die Kamera 125 erreichen, aber nicht von ihr erfasst werden kann. In einer solchen Konstellation kann der Abtastbereich 160 in Richtung des Fahrzeugs 105 geschwenkt werden, bis das optische Element 135 im Abtastbereich 160 liegt. Gleichzeitig kann eine Brennweite der Kamera 125 verkürzt werden, wobei ein Öffnungswinkel des Abtastbereichs vergrößert wird.

Alternativ kann ein weiteres optisches Element 165 verwendet werden, um Licht vom ersten optischen Element 135 in die Kamera 125 einzukoppeln. Das weitere optische Element 165 ist bevorzugt an der Kamera 125 angebracht und kann ebenfalls ein reflektives oder ein refraktives Element umfassen. In einer Ausführungsform umfasst die Kamera 125 eine optische Linse oder ein Objektiv, welches das weitere optische Element 165 umfasst.

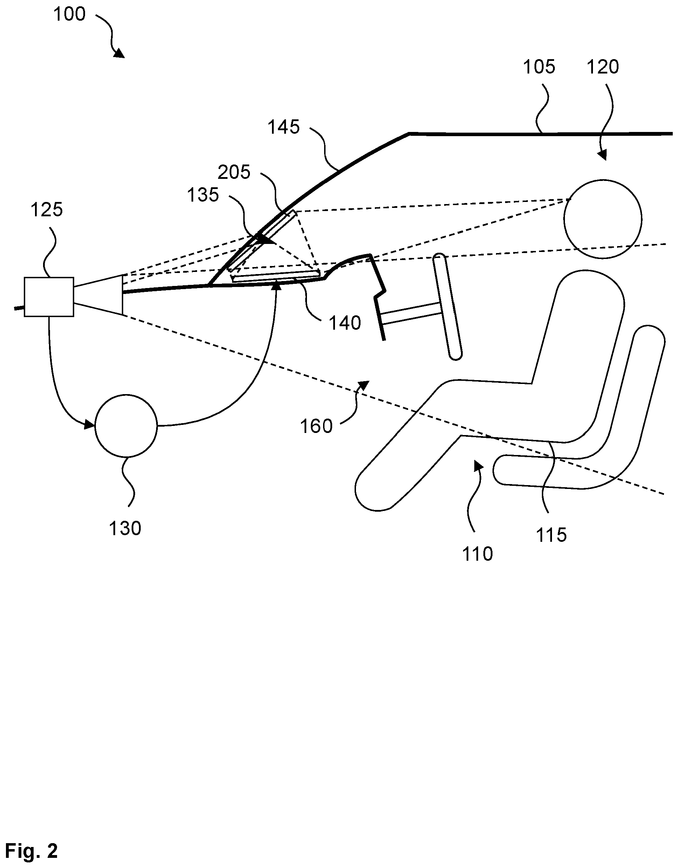

Figur 2 zeigt ein Anzeigesystem 100 in einer zweiten beispielhaften Ausführungsform. In ähnlicher Weise wie in der in Figur 1 dargestellten Ausführungsform wird zumindest ein Teil des dem Fahrer 115 mittels der Anzeige 140 bereitgestellten Bilds mittels eines optischen Elements 135 zumindest teilweise in die Kamera 125 umgelenkt. Hier befindet sich die Kamera 125 jedoch höher am Fahrzeug 105, sodass das Licht des Bilds durch die Frontscheibe 145 gelenkt werden kann.

Bei Einsatz einer Anzeige 140 nach Art eines Bildschirms könnte das optische Element 135 nach Art eines Spiegels beispielsweise im Bereich des Fahrerplatzes 110 platziert werden. In der Ausführungsform von Figur 2 projiziert die Anzeige 140 das Bild für den Fahrer 115 jedoch auf eine Scheibe 205, die das projizierte Bild in Richtung des Kopfbereichs 120 umlenkt, sodass der Fahrer 115 das Bild in einer vorbestimmten Entfernung auf einer Achse wahrnehmen kann, die von seinem Kopf durch die Scheibe 205 verläuft. Die Scheibe 205 kann separat ausgeführt sein oder mit der Frontscheibe 145 zusammenfallen. Licht der Anzeige 140 kann vor oder nach der Reflexion an der Scheibe 205 mittels des optischen Elements 135 ausgekoppelt und in Richtung der Kamera 125 gelenkt werden. Das optische Element 135 kann mit der Scheibe 205 bzw. der Frontscheibe 145 kombiniert ausgeführt sein, wobei die oben bezüglich der Seitenscheibe 150 erwähnten Optionen angewandt werden können.

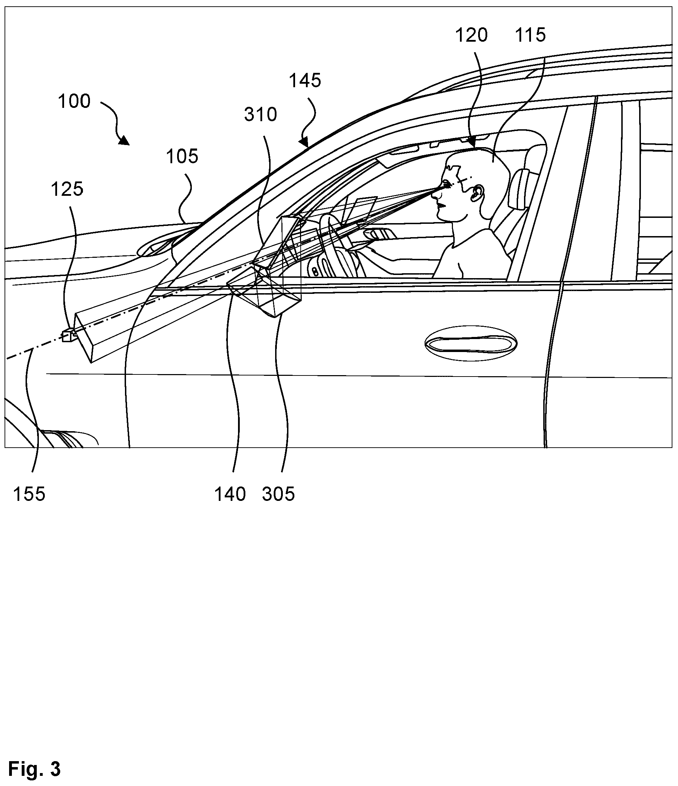

Figur 3 zeigt ein Anzeigesystem 100 in einer dritten beispielhaften Ausführungsform. Hier wird ein Bild der Anzeige 140 an einem Spiegel 305 auf eine Projektionsfläche 310 reflektiert, wo der Fahrer 115 es wahrnehmen kann. Dabei liegt die Projektionsfläche 310 nur unwesentlich versetzt zur Verbindungslinie 155, sodass das durch den Fahrer 115 wahrnehmbare Bild praktisch dieselbe Perspektive aufweisen kann wie ein durch die Kamera 125 bereitgestelltes Bild, das symbolisch an der Kamera 125 angedeutet ist.

Es ist zu beachten, dass Merkmale und Ausführungsformen von Elementen des Fahrzeugs 105 oder des Anzeigesystems 100, die mit Bezug auf die Figuren 1 bis 3 beschrieben sind, untereinander übertragen werden können.

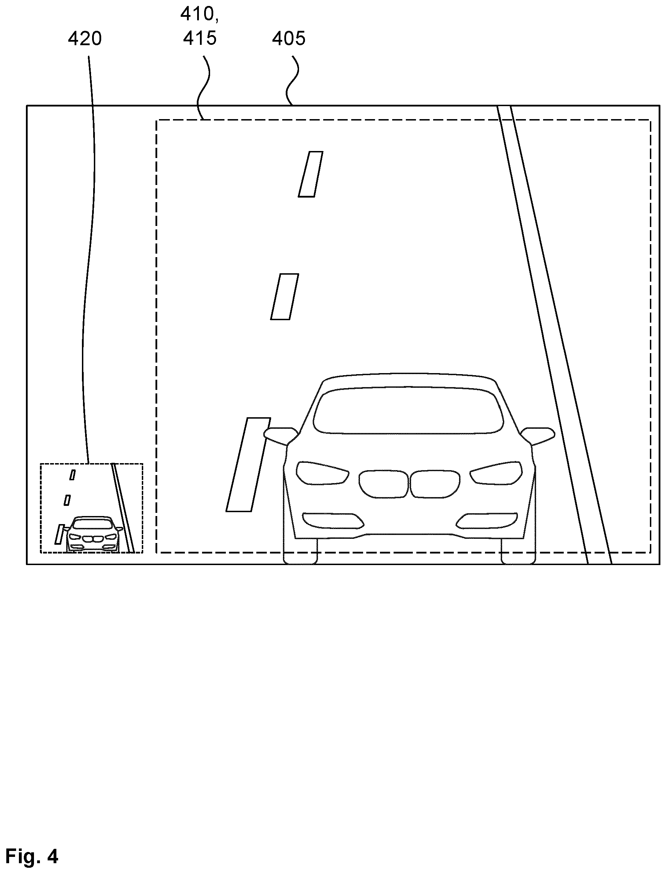

Figur 4 zeigt eine beispielhafte Darstellung eines ersten Bilds 405 und eines zweiten Bilds 410. Das erste Bild 405 ist durch die Kamera 125 aus einem Umfeld des Fahrzeugs 105 abgetastet und zeigt einen Inhalt des Abtastbereichs 160. Im ersten Bild 405 sind ein Darstellungsabschnitt 415 und ein Kontrollabschnitt 420 definiert.

Dabei sind die Abschnitte 415 und 420 bevorzugt überschneidungsfrei oder disjunkt. Es gibt keinen Abschnitt des ersten Bilds 405, der sowohl im Darstellungsabschnitt 415 als auch im Kontrollabschnitt 420 liegt. Der Kontrollabschnitt 420 ist üblicherweise kleiner als der Darstellungsabschnitt 415 und kann nur wenige Bildelemente (Pixel) umfassen. Beispielsweise kann der Kontrollabschnitt 420 eine Anordnung von ca. 3 x 3 Pixeln oder 4 x 4 Pixeln umfassen. In der Darstellung von Figur 4 ist der Kontrollabschnitt 420 zu Erläuterungszwecken größer dargestellt.

Der Darstellungsabschnitt 415 liegt dem zweiten Bild 410 zu Grunde. Insbesondere kann das zweite Bild 410 einen Inhalt des Darstellungsabschnitts 415 darstellen, allerdings kann das zweite Bild 410 beispielsweise bezüglich einer Helligkeit, eines Kontrasts und/oder seiner Farben angepasst sein.

Der Kontrollabschnitt 420 umfasst denjenigen Teil des ersten Bilds 405, in den mittels des optischen Elements 135 das mittels der Anzeige 140 bereitgestellte zweite Bild 410 in den Abtastbereich 160 umgelenkt ist. Der Inhalt des Kontrollabschnitts 420 kann analysiert werden, um einen Darstellungsparameter wie eine Helligkeit und/oder einen Kontrast des durch den Fahrer 115 wahrnehmbaren zweiten Bilds 410 bestimmt werden. In Abhängigkeit dieser Bestimmung kann die Darstellung des zweiten Bilds 410 auf der Anzeige 140 durch die Verarbeitungseinrichtung 130 angepasst werden. Wird beispielsweise festgestellt, dass das zweite Bild 410 im Kontrollabschnitt 420 zu dunkel ist, so kann die Anzeige 140 dazu angesteuert werden, das zweite Bild 410 heller auszugeben.

Sollten der Darstellungsabschnitt 415 und der Kontrollabschnitt 420 nicht disjunkt im ersten Bild 405 sein, so kann sich im zweiten Bild 410 an der Stelle, an welcher der Kontrollabschnitt 420 liegt, ein "endloser Tunnel" ergeben, der sich als Kaskade ineinander verschachtelter, immer weiter verkleinerter Abbildungen des zweiten Bilds 410 ergibt. In diesem Fall kann die Bestimmung des Darstellungsparameters bezüglich des Kontrollabschnitts 420 einen Abschnitt, in dem der Tunnel liegt, vernachlässigen.

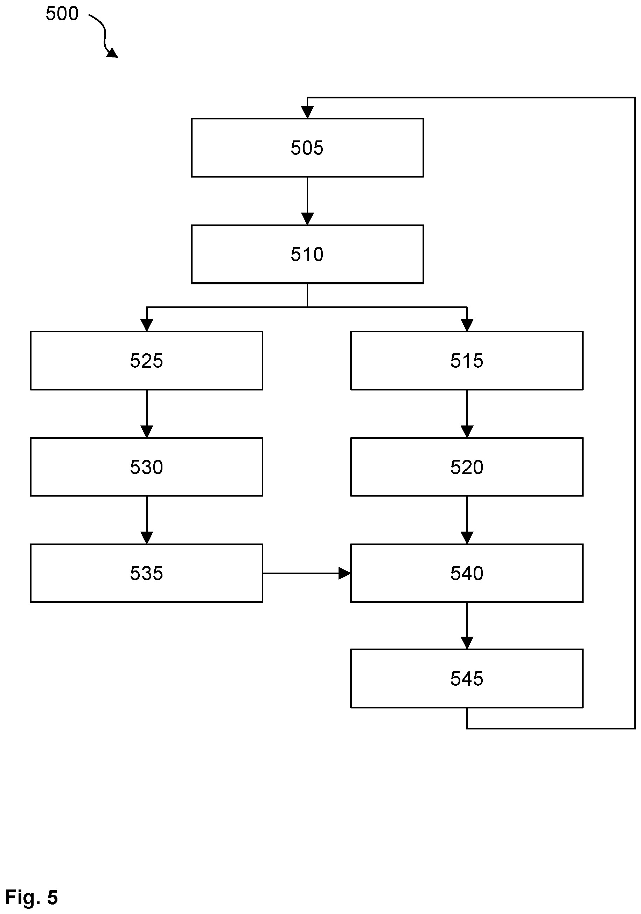

Figur 5 zeigt ein Ablaufdiagramm eines Verfahrens 500 zur Steuerung eines Anzeigesystems 100. In einem Schritt 505 wird mittels der Kamera 125 ein Umfeld des Fahrzeugs 105 im Abtastbereich 160 abgetastet. In einem Schritt 510 wird ein erstes Bild 405 bereitgestellt, in dem in einem Schritt 515 der Darstellungsabschnitt 410 bestimmt wird. Der Darstellungsabschnitt 410 hat üblicherweise eine vorbestimmte Lage und Größe im ersten Bild 405, solange sich die Ausrichtung und Brennweite der Kamera 125 nicht ändert. In einem Schritt 520 kann im Darstellungsabschnitt 410 ein darzustellender Inhalt bestimmt werden.

Parallel dazu kann in einem Schritt 525 im ersten Bild 405 der Kontrollabschnitt 420 bestimmt werden. Ein Inhalt des Kontrollabschnitts 420 kann in einem Schritt 530 analysiert werden, um beispielsweise zu bestimmen, ob eine Helligkeit, eine Farbgebung oder ein Kontrast jeweils vorbestimmten Werten entsprechen. In einem Schritt 530 können einer oder mehrere Darstellungsparameter bestimmt werden.

Auf der Basis des wenigstens einen Darstellungsparameters und dem darzustellenden Inhalt kann die Anzeige 140 in einem Schritt 540 angesteuert werden, um das zweite Bild 410 bereitzustellen. Eine Rückkopplung des dargestellten zweiten Bilds 410 in das erste Bild 405 kann in einem Schritt 545 erfolgen, indem das zweite Bild 410 mittels des optischen Elements 135 in den Abtastbereich 160 der Kamera 125 eingekoppelt wird. Eine erste Verzögerung zwischen der Ansteuerung der Anzeige 140 und der Bereitstellung eines korrespondierenden zweiten Bilds 410 sowie eine zweite Verzögerung zwischen dem Erfassen des ausgegebenen zweiten Bilds 410 als Teil des ersten Bilds 404 und dem Bereitstellen eines neuen ersten Bilds 405 können im Schritt 545 berücksichtigt bzw. modelliert werden.

### Bezugszeichen

- 100: System
- 105: Fahrzeug
- 110: Fahrerplatz
- 115: Fahrer
- 120: Kopfbereich
- 125: Kamera
- 130: Verarbeitungseinrichtung
- 135: optisches Element
- 140: grafische Anzeige
- 145: Frontscheibe
- 150: Seitenscheibe
- 155: Verbindungslinie
- 160: Abtastbereich
- 165: weiteres optisches Element

- 205: Scheibe

- 305: Spiegel
- 310: Projektionsfläche

- 405: erstes Bild
- 410: zweites Bild
- 415: Darstellungsabschnitt
- 420: Kontrollabschnitt

- 500: Verfahren
- 505: Umfeld abtasten
- 510: erstes Bild bereitstellen
- 515: Darstellungsabschnitt bestimmen
- 520: darzustellenden Inhalt bestimmen
- 525: Kontrollabschnitt bestimmen
- 530: Darstellung analysieren
- 535: Darstellungsparameter bestimmen
- 540: Anzeige ansteuern
- 545: Rückkopplung durch Reflexion

## Patentansprüche

1. Anzeigesystem (100) für ein Fahrzeug (105), wobei das Anzeigesystem (100) folgendes umfasst:
- eine Kamera (125) mit einem vorbestimmten Abtastbereich (160) zur Abtastung eines ersten Bilds (405) aus einem Umfeld des Fahrzeugs (105);
- eine Verarbeitungseinrichtung (130) zur Bereitstellung eines zweiten Bilds (410) auf der Basis des ersten Bilds (405);
- eine grafische Anzeige (140) zur Darstellung des zweiten Bilds (410); und
- ein optisches Element (135) zur Einblendung der Anzeige (140) in den Abtastbereich (160) der Kamera (125), sodass ein Abschnitt des ersten Bilds (405) das zweite Bild (410) umfasst;
- wobei die Verarbeitungseinrichtung dazu eingerichtet ist, das zweite Bild (410) in Abhängigkeit der Einblendung bereitzustellen.

2. Anzeigesystem (100) nach Anspruch 1, wobei die Verarbeitungseinrichtung dazu eingerichtet ist, das zweite Bild (410) derart bereitzustellen, dass die Einblendung im ersten Bild (405) eine vorbestimmte Helligkeit und/oder einen vorbestimmten Kontrast aufweist.

3. Anzeigesystem (100) nach Anspruch 1 oder 2, wobei der Abtastbereich (160) von der Kamera (125) aus nach hinten gerichtet ist; wobei das optische Element (135) am Fahrzeug (105) hinter der Kamera (125) und hinter dem zweiten Bild (410) liegt.

4. Anzeigesystem (100) nach einem der vorangehenden Ansprüche, wobei das Fahrzeug (105) eine transparente Scheibe (205) aufweist und das optische Element (135) an der Scheibe (205) angebracht ist.

5. Anzeigesystem (100) nach einem der vorangehenden Ansprüche, wobei das Fahrzeug (105) einen Fahrerplatz (110) umfasst, sodass ein Kopf eines Fahrers (115) auf dem Fahrerplatz (110) in einem vorbestimmten Kopfbereich (120) liegt; wobei die Anzeige (140) dazu eingerichtet ist, das zweite Bild (410) im Bereich einer Verbindungslinie (155) zwischen dem Kopfbereich und der Kamera (125) bereitzustellen.

6. Anzeigesystem (100) nach einem der vorangehenden Ansprüche, wobei an der Kamera (125) ein weiteres optisches Element (165) zur Einblendung des ersten optischen Elements (135) in den Abtastbereich (160) angebracht ist.

7. Anzeigesystem (100) nach einem der vorangehenden Ansprüche, wobei die Anzeige (140) dazu eingerichtet ist, das zweite Bild (410) zu projizieren; wobei im Strahlengang der Anzeige (140) ein weiteres optisches Element (135) zur Auskopplung des zweiten Bilds (410) angebracht ist.

8. Fahrzeug (105), umfassend ein Anzeigesystem (100) nach einem der vorangehenden Ansprüche.

9. Verfahren (500) zur Steuerung eines Anzeigesystems (100) nach einem der Ansprüche 1 bis 7, wobei das Verfahren folgende Schritte umfasst: Bereitstellen (510) eines ersten Bilds (405) mittels der Kamera (125); Bestimmen (525) eines Kontrollabschnitts (420) im ersten Bild (405), der das zweite Bild (410) repräsentiert; und Bereitstellen des zweiten Bilds (410) in Abhängigkeit des Kontrollabschnitts (420).

10. Verfahren (500) nach Anspruch 9, wobei das erste Bild (405) in den Kontrollabschnitt (420) und einen Darstellungsabschnitt (415) disjunkt unterteilt wird; wobei das zweite Bild (410) nur auf der Basis des Darstellungsabschnitts (415) bereitgestellt wird.

11. Verfahren (500) nach einem der vorangehenden Ansprüche 9 und10, wobei eine zeitliche Verzögerung zwischen einer Änderung des zweiten Bilds (410) und einer Änderung des Kontrollabschnitts (420) berücksichtigt wird.

## Claims

1. Display system (100) for a vehicle (105), wherein the display system (100) comprises the following:
- a camera (125) having a predetermined scanning area (160) for scanning a first image (405) from an environment of the vehicle (105);
- a processing unit (130) for providing a second image (410) on the basis of the first image (405);
- a graphic display (140) for displaying the second image (410); and
- an optical element (135) for inserting the display (140) into the scanning area (160) of the camera (125), so that a section of the first image (405) comprises the second image (410);
- wherein the processing unit is configured to provide the second image (410) as a function of the insertion.

2. Display system (100) according to Claim 1, wherein the processing unit is configured to provide the second image (410) in such a way that the insertion in the first image (405) has a predetermined brightness and/or a predetermined contrast.

3. Display system (100) according to Claim 1 or 2, wherein the scanning area (160) is directed to the rear from the camera (125); wherein the optical element (135) is located on the vehicle (105) behind the camera (125) and behind the second image (410).

4. Display system (100) according to any one of the preceding claims, wherein the vehicle (105) has a transparent pane (205) and the optical element (135) is attached to the pane (205).

5. Display system (100) according to any one of the preceding claims, wherein the vehicle (105) comprises a driver station (110), so that a head of a driver (115) on the driver station (110) is located in a predetermined head area (120); wherein the display (140) is configured to provide the second image (410) in the area of a connecting line (155) between the head area and the camera (125).

6. Display system (100) according to any one of the preceding claims, wherein a further optical element (165) for inserting the first optical element (135) into the scanning area (160) is attached to the camera (125).

7. Display system (100) according to any one of the preceding claims, wherein the display (140) is configured to project the second image (410); wherein a further optical element (135) for decoupling the second image (410) is attached in the beam path of the display (140).

8. Vehicle (105) comprising a display system (100) according to any one of the preceding claims.

9. Method (500) for controlling a display system (100) according to any one of Claims 1 to 7, wherein the method comprises the following steps:
providing (510) a first image (405) by means of the camera (125); determining (525) a monitoring section (420) in the first image (405), which represents the second image (410); and providing the second image (410) as a function of the monitoring section (420).

10. Method (500) according to Claim 9, wherein the first image (405) is disjointedly divided into the monitoring section (420) and a display section (415); wherein the second image (410) is only provided on the basis of the display section (415).

11. Method (500) according to either one of preceding Claims 9 and 10, wherein a time delay between a change of the second image (410) and a change of the monitoring section (420) is taken into consideration.

## Revendications

1. Système d'affichage (100) pour un véhicule (105), le système d'affichage (100) comprenant les éléments suivants :
- une caméra (125) ayant une zone de balayage (160) prédéterminée pour balayer une première image (405) issue d'un environnement du véhicule (105) ;
- un dispositif de traitement (130) destiné à fournir une deuxième image (410) sur la base de la première image (405) ;
- un affichage (140) graphique destiné à représenter la deuxième image (410) ; et
- un élément optique (135) destiné à incruster l'affichage (140) dans la zone de balayage (160) de la caméra (125), de sorte qu'une portion de la première image (405) comprenne la deuxième image (410) ;
- le dispositif de traitement étant conçu pour fournir la deuxième image (410) en fonction de l'incrustation.

2. Système d'affichage (100) selon la revendication 1, le dispositif de traitement étant conçu pour fournir la deuxième image (410) de telle sorte que l'incrustation dans la première image (405) présente une luminosité prédéterminée et/ou un contraste prédéterminé.

3. Système d'affichage (100) selon la revendication 1 ou 2, la zone de balayage (160) étant dirigée vers l'arrière à partir de la caméra (125) ; l'élément optique (135) sur le véhicule (105) se trouvant derrière la caméra (125) et derrière la deuxième image (410).

4. Système d'affichage (100) selon l'une des revendications précédentes, le véhicule (105) possédant une vitre transparente (205) et l'élément optique (135) étant monté sur la vitre (205).

5. Système d'affichage (100) selon l'une des revendications précédentes, le véhicule (105) comprenant un poste de conducteur (110), de sorte qu'une tête d'un conducteur (115) sur le poste de conducteur (110) se trouve dans une zone de tête prédéterminée (120) ; l'affichage (140) étant conçu pour fournir la deuxième image (410) dans la zone d'une ligne de connexion (155) entre la zone de la tête et la caméra (125).

6. Système d'affichage (100) selon l'une des revendications précédentes, un élément optique supplémentaire (165) destiné à incruster le premier élément optique (135) dans la zone de balayage (160) étant monté sur la caméra (125).

7. Système d'affichage (100) selon l'une des revendications précédentes, l'affichage (140) étant conçu pour projeter la deuxième image (410) ; un élément optique supplémentaire (135) destiné au découplage de la deuxième image (410) étant monté dans le trajet de faisceau de l'affichage (140).

8. Véhicule (105) comprenant un système d'affichage (100) selon l'une des revendications précédentes.

9. Procédé (500) de commande d'un système d'affichage (100) selon l'une des revendications 1 à 7, le procédé comprenant les étapes suivantes :
fourniture (510) d'une première image (405) au moyen de la caméra (125) ;
détermination (525) d'une portion de contrôle (420) dans la première image (405), laquelle représente la deuxième image (410) ; et fourniture de la deuxième image (410) en fonction de la portion de contrôle (420).

10. Procédé (500) selon la revendication 9, la première image (405) étant divisée de manière disjointe en la portion de contrôle (420) et une portion de représentation (415) ; la deuxième image (410) étant fournie uniquement sur la base de la portion de représentation (415).

11. Procédé (500) selon l'une des revendications précédentes 9 et 10, un retard dans le temps entre une modification de la deuxième image (410) et une modification de la portion de contrôle (420) est pris en compte.
